# EUROPEAN PATENT SPECIFICATION

(11) **EP 4 024 171 B1**
(45) Date of publication and mention of the grant of the patent: **07.02.2024**
(21) Application number: 21207704.4
(22) Date of filing: 11.11.2021
(51) Int. Cl.: G06F 3/02, G06F 3/023, G06F 3/03, G06F 3/038

(54) **ANALOG INPUT DEVICE, AND METHOD OF CONTROLLING A LIGHTING ARRANGEMENT OF THE ANALOG INPUT DEVICE**
ANALOGE EINGABEVORRICHTUNG UND VERFAHREN ZUR STEUERUNG EINER BELEUCHTUNGSANORDNUNG DER ANALOGEN EINGABEVORRICHTUNG
DISPOSITIF D'ENTRÉE ANALOGIQUE ET PROCÉDÉ DE COMMANDE D'UN AGENCEMENT D'ÉCLAIRAGE DU DISPOSITIF D'ENTRÉE ANALOGIQUE

(30) Priority: 30.12.2020 CN 202011615560
(43) Date of publication of application: 06.07.2022
(73) Proprietor: Razer (Asia-Pacific) Pte. Ltd., Singapore 138538 (SG)
(72) Inventor: LEE, Chung Wei, Singapore 138538 (SG); TAN, Thuan Teck, Singapore 138538 (SG); YANG, Wenliang, Singapore 138538 (SG); SIM, Alvin, Singapore 138538 (SG); LOW, Kok Kiong, Singapore 138538 (SG); DUAN, Ling, Shenzhen 518057 (CN); MITCHELL, Christopher, Singapore 138538 (SG)
(74) Representative: Viering, Jentschura & Partner mbB Patent- und Rechtsanwälte

(56) References cited:
- WO-A1-2020/122812
- US-A1- 2015 334 799
- US-A1- 2017 364 259

## Description

### Technical Field

Various embodiments generally relate to an analog input device, and a method of controlling a lighting arrangement of the analog input device. In particular, various embodiments generally relate to a force-sensitive or pressure sensitive analog input device.

### Background

Conventionally, input devices such as gaming controller, gaming keypad, keyboard, or mice includes buttons or keys which are coupled to digital switches. These digital switches only output binary signal, and limits the achievable functions of the input devices and possible user intents. For example, in gaming, more granularity of the input may be preferred for more precise control of a magnitude for a character's speed, directions, movements, actions etc. Such controls are typically not achievable with binary input devices.

Accordingly, there is a need for a more effective input device to address the above issues.

US 2017/364259 A1 discloses a device which has a keyboard module with several key areas and several sensor devices detect the pressure of key-pressing operation for every key area. A control circuit adjusts the parameter of a process regarding the key-pressing operation of keyboard module based on the information of the pressure detected for every key area. The control circuit is comprised so that the sensitivity with respect to key-pressing operation for every key area is adjusted.

US 2015/334799 A1 discloses a lighting circuit which has LED drivers, a host controller connected to the LED drivers, and predetermined number of LEDs connected to the LED drivers. Each LED illuminates a key of the keyboard and is responsive to an operation performed by a computing device associated with the keyboard.

### Summary

The invention is defined by the appended independent claims. Further embodiments are defined by the dependent claims.

According to various embodiments, there is provided an analog input device.

According to various embodiments, there is provided a method of controlling a lighting.

### Brief description of the drawings

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
FIG. 1A shows a schematic diagram of an analog input device according to various embodiments;
FIG. 1B to FIG. 1D show the analog input device of FIG. 1A in the form of a keyboard or a keypad being lit based on an amount of depression of a key according to various embodiments;
FIG. 2A and FIG. 2B show schematic diagrams of the analog input device of FIG. 1A with more details according to various embodiments;
FIG. 3A to FIG. 3D show various examples of the cut-out profile of the light blocking element analog input device of FIG. 2A and FIG. 1B according to various embodiments;
FIG. 4 shows a schematic diagram of a computing system for receiving and processing analog input according to various embodiments; and
FIG. 5 shows a schematic diagram of a computing system with an analog keypad, as an analog input device, in accordance with an example embodiment.

### Detailed description

Embodiments described below in the context of the apparatus are analogously valid for the respective methods, and vice versa. Furthermore, it will be understood that the embodiments described below may be combined, for example, a part of one embodiment may be combined with a part of another embodiment.

It should be understood that the terms "on", "over", "top", "bottom", "down", "side", "back", "left", "right", "front", "lateral", "side", "up", "down" etc., when used in the following description are used for convenience and to aid understanding of relative positions or directions, and not intended to limit the orientation of any device, or structure or any part of any device or structure. In addition, the singular terms "a", "an", and "the" include plural references unless context clearly indicates otherwise. Similarly, the word "or" is intended to include "and" unless the context clearly indicates otherwise.

As described herein, a processor (or a processing unit or a host processing unit or a host processor etc) may be understood as any kind of a logic implementing entity, which may be special purpose circuitry or a processor executing software stored in a memory, firmware, or any combination thereof. Thus, the processor may be a hard-wired logic circuit or a programmable logic circuit such as a programmable processor (e.g. Programmable Logic Controller (PLC)), e.g. a microprocessor (e.g. a Complex Instruction Set Computer (CISC) processor or a Reduced Instruction Set Computer (RISC) processor). The processor may also be a processor executing software, e.g. any kind of computer program, e.g. a computer program using a virtual machine code such as e.g. Java.

Various embodiments generally relate to an analog input device and a method of controlling an lighting arrangement of the analog input device. In particular, various embodiments generally relate to a force-sensitive analog input device or a pressure-sensitive analog input device. According to various embodiments, the input device may include, but not limited to, a controller, a keypad, a keyboard, a mouse, a joystick, or a steering wheel. According to various embodiments, the input device may include a matrix of analog buttons or keys, each may be configured to vary an input signal based on an amount of depressing force or pressure applied by an user on the respective analog button or key. Accordingly, the respective analog button or key may provide a variable force-sensitive or pressure-sensitive analog input depending on the force or pressure applied to the analog button or key. According to various embodiments, varying an amount of depressing force or pressure applied on the respective analog button or key may vary an extent or degree of depression experienced by the analog button or key. Accordingly, varying the extent or degree of depression of the respective analog button or key may vary an analog output signal of the respective analog button or key from the analog input device. According to various embodiments, the analog output signal may be processed by a processor to generate a corresponding application event in an application. According to various embodiments, the analog output signal may be processed and displayed through lighting effects to allow a user to intuitively see the depth and strength of pressing the analog button or key. Accordingly, the lighting arrangement of the analog input device may be activated based on the analog output signal. For example, the lighting arrangement of the analog input device may be activated proportionally with respect to the analog output signal so as to corresponding light up the analog input device to serve as visual feedback or indicator to the user the amount of depressing force or pressure applied by the user on the respective analog button or key.

Various embodiments generally relate to a computing system for receiving and processing analog input. The computing system may refer to an information handling system or a functional system capable of performing substantial computation. The computing system may include a processing unit, random-access memory, disk storage, input and output devices etc. According to various embodiments, the computing system may include a host processor and the analog input device of the various embodiments. According to various embodiments, the user may provide an analog input via the analog input device such that an analog input signal may be sent via the analog input device to the host processor and the host processor may process the analog input signal to generate a corresponding application event in response to the analogy input signal and provide a corresponding output. The corresponding output may include, but not limited to, a text and/or graphic display, sound, lightings, or haptic feedback. For example, output in the form of lightings may be the lighting effect of the analog input device of the various embodiments.

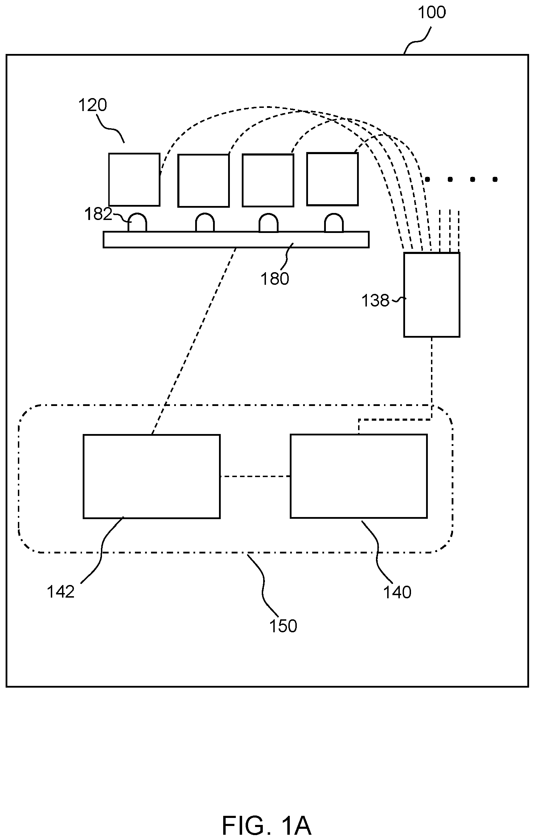

FIG. 1A shows a schematic diagram of an analog input device 100 according to various embodiments. According to various embodiments, the analog input device 100 may include at least one mounting panel 110. According to various embodiments, the at least one mounting panel 110 may be part of an internal support structure of the analog input device 100. According to various embodiments, the at least one mounting panel 110 may also be an internal printed circuit board (PCB) of the analog input device 100. According to various embodiments, the analog input device 100 may include a matrix of analog push button assemblies 120 mounted to the at least one mounting panel 110. According to various embodiments, each analog push button assembly 120 of the matrix of analog push button assemblies 120 may output an analog signal. According to various embodiments, the analog input device 100 may include two or more or a plurality of analog push button assemblies 120. For example, when the analog input device 100 is a mouse, the analog input device 100 may include two or more analog click buttons. When the analog input device 100 is a keypad having 15-25 keys, the analog input device 100 may include up to 15-25 analog keys. When the analog input device 100 is a gaming controller having four or more buttons, the analog input device 100 may include two or three or four or more analog buttons. When the analog input device 100 is a keyboard, the analog input device 100 may include a plurality of analog keys.

According to various embodiments, the analog input device 100 may include a multiplexer 138 having an output side and an input side. According to various embodiments, the input side of the multiplexer 138 may be coupled to the matrix of analog push button assemblies 120. Accordingly, the multiplexer 138 may accept multiple analog signals from the matrix of analog push button assemblies 120 and provides a single output. According to various embodiments, the analog push button assemblies 120 of the analog input device 100 may be coupled to the multiplexer 138 via a matrix connection.

According to various embodiments, the analog input device 100 may include an analog-to-digital converter (ADC) 140. The ADC 140 may be coupled to the output side of the multiplexer 138. Accordingly, the ADC 140 may receive the analog signal from the multiplexer 138 and may be configured to discretize the analog signal into a corresponding digital-step-value. According to various embodiments, the multiplexer 138 may be electrically coupled to the ADC 140 such that the analog signal output from the multiplexer 138 may be sent to the ADC 140 for converting into readable data. According to various embodiments, the ADC 140 may convert the continuous-time and continuous-amplitude analog signal from the multiplexer 138 into a discrete-time and discrete-amplitude digital-step-value. According to various embodiments, the ADC 140 may perform the conversion at a predetermined sampling interval. According to various embodiments, the total number of discrete digital-step-values for the range of analog signal from the multiplexer 138may be based on a resolution of the ADC 140. According to various embodiments, the digital-step-value may be an integer number from 0 to N, whereby N is one less than a power of two. Accordingly, each integer number of the digital-step-value may represent a corresponding magnitude of the analog signal from the analog push button assembly 120 .

According to various embodiments, the analog input device 100 may include a processor 142. The processor 142 may be coupled to the ADC 140 in a manner so as to receive the digital-step-value. The processor 142 may be configured to output a data packet including a button identity (ID) of the analog push button assembly 120 pressed by the user's finger and the digital-step-value corresponding to the analog signal from the analog push button assembly 120. According to various embodiments, the processor 142 and the ADC 140 may be in digital communication with each other. Accordingly, the digital-step-value converted by the ADC 140 may be digitally communicated to the processor 142 from the ADC 140. According to various embodiments, the processor 142 may receive various information data from the ADC 140 and/or the analog push button assembly 120, and may arrange, compile and/or format the various information data, including button identity (ID) and the digital-step-value, into a string of formatted data for transmission. According to various embodiments, the string of formatted data may be in the form of a USB (Universal Serial Bus) HID (Human Interface Device) Vendor report.

According to various embodiments, the ADC 140 and the processor 142 may be separate elements of the analog input device 100. According to various embodiments, the ADC 140 and the processor 142 may be integrated as a single microcontroller 150.

According to various embodiments, the analog input device 100 may further include a lighting arrangement 180 including at least one light source 182 controlled by the processor 142. According to various embodiments, the lighting arrangement 180 may include backlighting for the at least one analog push button assembly 120, and/or underglow lighting for the analog input device 100. Hence, the at least one light source 182 may serve as backlight for the at least one analog push button assembly 120 and/or may serve as underglow light for the analog input device 100.

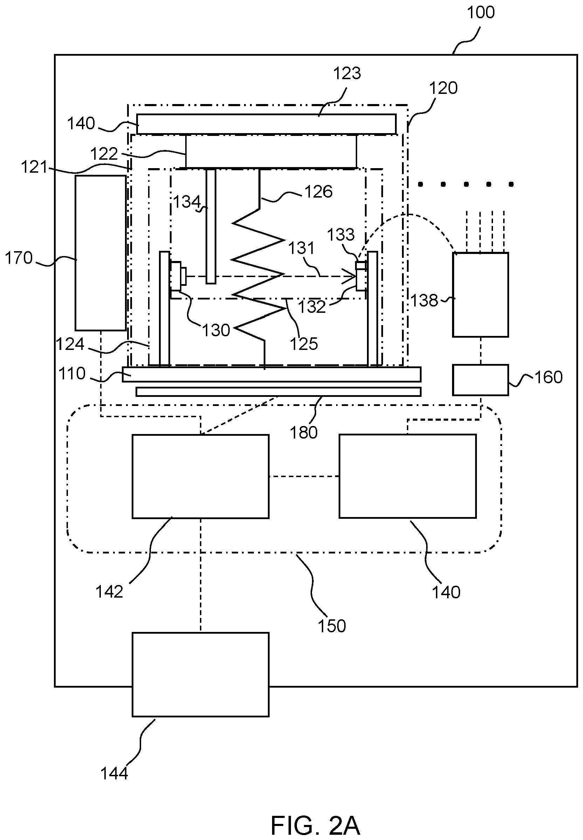

According to various embodiments, the processor 142 may be configured to control the lighting arrangement 180 based on a lighting sequence and/or pattern stored in the storage element (for example see 170 in FIG. 2A). According to various embodiments, the processor 142 may receive instructions from the host computing device which the analog input device 100 is connected to. According to various embodiments, the processor 142 may prioritise the control of the lighting arrangement 180 to be based on the instructions received from the host computing device over the lighting sequence and/or pattern stored in the storage element 170. According to various embodiments, the processor 142 may overwrite or replace the lighting sequence and/or pattern stored in the storage element 170 with a new lighting sequence and/or pattern based on instructions received from the host computing device.

According to various embodiments, the lighting arrangement 180 may include a plurality of light sources 182 respectively associated with the matrix of analog push button assemblies 120 in a manner so as to individually illuminate each of the matrix of analog push button assemblies 120. Accordingly, one light source 182 may be associated with one analog push button assembly 120. Hence, each of the matrix of analog push button assemblies 120 may be paired with a corresponding light source 182 of the lighting arrangement 180 in a manner such that each of the matrix of analog push button assemblies 120 may be independently lit by the corresponding light source 182.

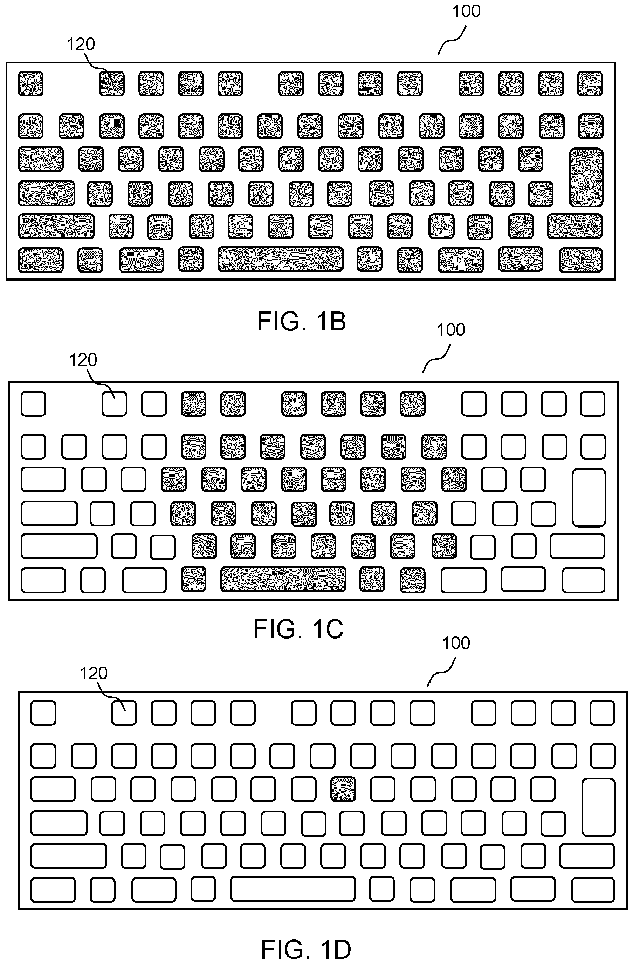

According to various embodiments, the plurality of light sources 182 of the lighting arrangement 180 are lit based on the digital-step-value corresponding to the analog signal from the analog push button assembly 120 pressed by the user's finger such that a number of the plurality of light sources 182 being lit (or a number of light sources 182, which are lit, among the plurality of light sources 182) is proportional to the digital-step-value. Accordingly, when one of the matrix of analog push button assemblies 120 is pressed, the lighting sequence and/or pattern of the lighting arrangement 180 depends on the amount of depression of the one of the matrix of analog push button assemblies 120. FIG. 1B to FIG. 1D show the analog input device 100 of FIG. 1A in the form of a keyboard or a keypad being lit based on an amount of depression of a key according to various embodiments. For example, when the one of the matrix of analog push button assemblies 120 is fully depressed, all the analog push button assemblies 120 may be lit (see FIG. 1B whereby all 78 keys are lighted up). Accordingly, all the plurality of light sources 182 of the lighting arrangement 180 may be activated to light up all the analog push button assemblies 120. When the one of the matrix of analog push button assemblies 120 is depressed halfway, half of the analog push button assemblies 120 may be lit (see FIG. 1C whereby 39 out of 78 keys are lighted up). Accordingly, half of the plurality of light sources 182 of the lighting arrangement 180 may be activated to light up a half of the analog push button assemblies 120. When the one of the matrix of analog push button assemblies 120 is depressed minimally, only one of the analog push button assemblies 120 may be lit (see FIG. 1D whereby 1 out of 78 keys are lighted up). Accordingly, one of the plurality of light sources 182 of the lighting arrangement 180 may be activated to light up one of the analog push button assemblies 120.

According to various embodiments, when the plurality of light sources 182 of the lighting arrangement 180 is being lighted up based on the digital-step-value corresponding to the analog signal from the analog push button assembly 120 pressed by the user's finger, the lighting effect generated may be in a wave profile (e.g. left to right, or right to left, or top to bottom, or bottom to top, or diagonal) or ripple profile (e.g. emanating outwards from a specific key) such that the plurality of light sources 182 of the lighting arrangement 180 may be proportionally lit based on the wave profile or the ripple profile. Accordingly, the matrix of analog push button assemblies 120 may be gradually lighted up according to the wave profile or the ripple profile as the analog push button assembly 120 is pressed gradually from a minimal to the fully depressed state.

According to various embodiments, when none of the matrix of analog push button assemblies 120 is depressed, none of the analog push button assemblies 120 may be lit or the matrix of analog push button assemblies 120 may be lit based on the lighting sequence and/or pattern stored in the storage element 170 or received from the host computing device. According to various embodiments, the processor 142 may prioritise the control of the lighting arrangement 180 to be based on the digital-step-value corresponding to the analog signal from the analog push button assembly 120 pressed by the user's finger over the instructions received from the host computing device and/or the lighting sequence and/or pattern stored in the storage element 170. Accordingly, upon depression of the analog push button assembly 120 or generation of the digital-step-value corresponding to the analog signal from the analog push button assembly 120 pressed by the user's finger, the processor 142 may interrupt any existing lighting sequence and/or pattern or unlighted state of the lighting arrangement 180 so as to control the lighting arrangement 180 for lighting up the matrix of analog push button assemblies 120 based on digital-step-value corresponding to the analog signal from the analog push button assembly 120 pressed by the user's finger.

According to various embodiments, the processor 142 may be configured to directly control the lighting arrangement 180 to light the plurality of light sources 182 based on the digital-step-value received from the ADC 140. Accordingly, the processor 142 may process the digital-step-value received from the ADC 140 and directly turn on a corresponding number of the plurality of light sources 182 based on the digital-step-value for illuminating a corresponding number of the matrix of analog push button assemblies 120.

According to various embodiments, the processor 142 may be configured to receive a lighting signal generated by the host computing device based on the digital-step-value in the data packet received from the analog input device 100 for controlling the lighting arrangement 180 to light the plurality of light sources 182 based on the digital-step-value. Accordingly, the host computing device may process the digital-step-value in the data packet received from the analog input device 100, generate the lighting signal based on the digital-step-value in the data packet, and send the lighting signal to the analog input device 100. The processor 142 of the analog input device 100 may receive and process the lighting signal from the host computing device and directly turn on a corresponding number of the plurality of light sources 182 based on the lighting signal for illuminating a corresponding number of the matrix of analog push button assemblies 120 based on the digital-step-value.

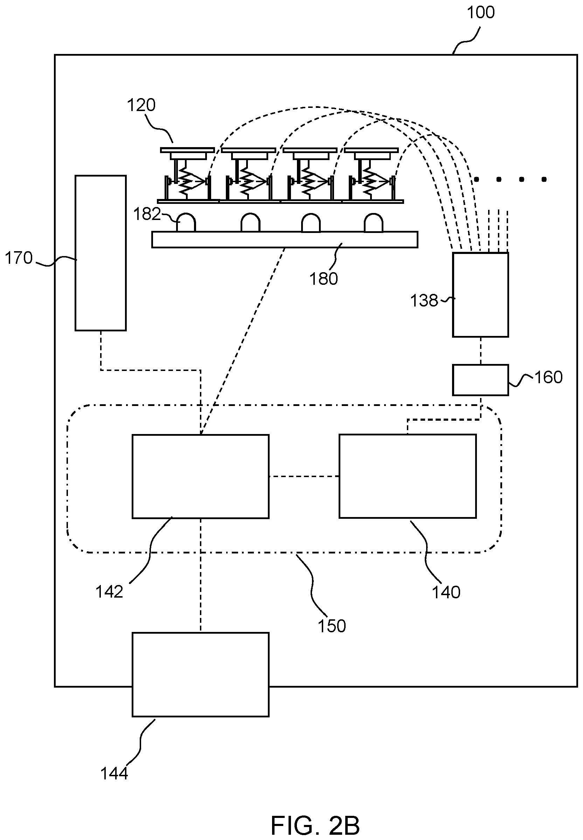

FIG. 2A and FIG. 2B show schematic diagrams of the analog input device 100 with further details of the analog push button assembly 120 and the analog input device 100 according to various embodiments. In FIG. 2A, one analog push button assembly 120 is illustrated, and the analog push button assembly 120 is not drawn to scale and is provided to depict details via an enlarged or exaggerated illustration to facilitate the understanding of the analog push button assembly 120. In FIG. 2B, a few analog push button assemblies 120 are illustrated as an example.

According to various embodiments, each analog push button assembly 120 may include a pressure sensor 121 having a plunger element 122 and a pressure reception arrangement 124. The plunger element 122 may interact with the pressure reception arrangement 124 in a manner so as to exert a pressure or a force on the pressure reception arrangement 124 when the analog push button assembly 120 is being pressed by a user's finger. According to various embodiments, the pressure sensor 121 may be a swappable single unitary key-switch or may be a non-separable integrated built-in arrangement of the analog input device 100. According to various embodiments, each analog push button assembly 120 may include a button cap 123 removably coupled or fixedly coupled to the plunger element 122 of the pressure sensor 121. According to various embodiments, the button cap 123 may be a thin shell having an input surface for receiving a finger tip of the user. Accordingly, the button cap 123 may be ergonomically shaped for receiving the finger tip.

According to various embodiments, the pressure reception arrangement 124 of each analog push button assembly 120 may include an optical sensing sub-arrangement 125 configured to measure an amount of light varied according to a pressure or force sensed at the pressure reception arrangement 124. Accordingly, depressing the analog push button assembly 120 may exert a corresponding pressure or force on the pressure reception arrangement 124 which may vary the amount of light sensed by the optical sensing sub-arrangement 125. According to various embodiments, the amount of light may be varied via proportionally varying an extent of blockage of the light with a light blocking element 134 with respect to the pressure or force on the pressure reception arrangement 124. According to various embodiments, the pressure reception arrangement 124 may include an output terminal 133 for outputting an analog signal corresponding to the amount of light measured. Accordingly, the amount of light measured may be output as the analog signal. According to various embodiments, the amount of light may be an intensity of light.

According to various embodiments, the pressure reception arrangement 124 may include a biasing element 126. The biasing element 126 may be arranged between the plunger element 122 and the at least one mounting panel 110. The biasing element 126 may bias the plunger element 122 away from the at least one mounting panel 110 in a biasing direction. Accordingly, the biasing element 126 may provide resistance against the pressure or force depressing the analog push button assembly 120. According to various embodiments, the biasing element 126 may include a spring or a resilient membrane structure or other suitable elements, structures or configurations which may return the plunger element 122 to an original or initial position after being depressed. According to various embodiments, the biasing element 126 may be directly or indirectly connected in between the plunger element 122 and the at least one mounting panel 110. According to various embodiments, the pressure reception arrangement 124 may include a housing mounted to the at least one mounting panel 110 and the plunger element 122 may be slidable through a ceiling of the housing. The button cap 123 may be coupled to the plunger element 122 so as to be movable relative to the housing. The biasing element 126 may bias the plunger element 122 away from the floor of the housing in the biasing direction so as to indirectly bias the button cap 123 away from the at least one mounting panel 110.

According to various embodiments, the optical sensing sub-arrangement 125 of the pressure reception arrangement 124 may include a light emitter 130. The light emitter 130 may be disposed at an intermediate level between the plunger element 122 and the at least one mounting panel 110. The light emitter 130 may be oriented to emit light along a light path 131 perpendicular to the biasing direction of the biasing element 126. Accordingly, the light path 131 of the light emitted from the light emitter 130 may be substantially perpendicular to a direction of depression of the at least one analog push button assembly 120 by the user. According to various embodiments, the light emitter 130 may be a laser light emitter or a collimated light emitter. According to various embodiments, the intermediate level between the plunger element 122 and the at least one mounting panel 110 may be a position along a height between the mounting panel 110 and a maximum depression of the plunger element 122.

According to various embodiments, the optical sensing sub-arrangement 125 of the pressure reception arrangement 124 may include a light sensor 132. The light sensor 132 may be disposed in the light path 131 and may be configured to generate an analog signal based on the amount of light sensed by the light sensor 132 for outputting via the output terminal 133. Accordingly, the light sensor 132 may be placed in a position that is directly facing the light emitter 130. Hence, the light emitter 130 and the light sensor 132 may be arranged in an opposing manner such that the light from the light emitter 130 is directly projected straight towards the light sensor 132. According to various embodiments, the light sensor 132 may detect an intensity of light incident on the light sensor 132 and output an analog signal according to the intensity of light detected. According to various embodiments, the light sensor 132 may include, but not limited to, a phototransistor-type light sensor or a photoresistor-type light sensor or a photodiode-type light sensor. According to various embodiments, the analog signal from the light sensor 132 may be an analog voltage or an analogue current.

According to various embodiments, the optical sensing sub-arrangement 125 of the pressure reception arrangement 124 may include a light blocking element 134. The light blocking element 134 may be associated with the plunger element 122 in a manner so as to be movable together with the plunger element 122 along a movement direction parallel to the biasing direction. The light blocking element 134 may be extending towards the mounting panel 110 to intersect the light path 131 between the light emitter 130 and the light sensor 132. According to various embodiments, the light blocking element 134 may be directly or indirectly coupled to the plunger element 122. According to various embodiments, the light blocking element 134 may be of an elongate shape and may be extending downwards towards the mounting panel 110. According to various embodiments, the light blocking element 134 may be positioned in a manner such that a movement path of the light blocking element 134, due to depressing of the analog push button assembly 120 by the user, may intersect the light path 131 between the light emitter 130 and the light sensor 132. According to various embodiments, when the pressure reception arrangement 124 includes the housing and the plunger element 122 is slidable through the ceiling of the housing with the button cap 123 coupled to the plunger element 122, the light blocking element 134 may be coupled to the plunger element 122 so as to be movable together with the button cap 123.

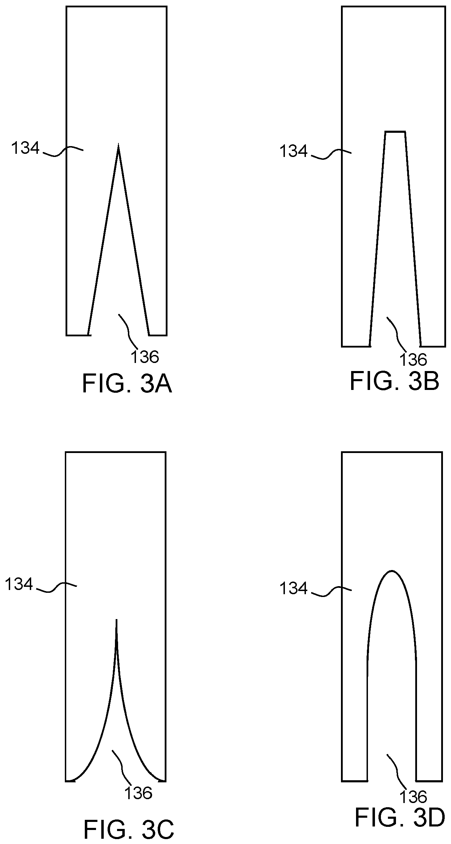

According to various embodiments, the light blocking element 134 may include a cut-out profile. FIG. 3A to FIG. 3D show various examples of the cut-out profile 136 of the light blocking element 134. The cut-out profile 136 of the light blocking element 134 may vary the amount of light passing through the light blocking element 134 as the light blocking element 134 moves transversely across the light path 131 when a pressure or force is applied to push the button cap 123 towards the at least one mounting panel 110. Accordingly, the cut-out profile 136 of the light blocking element 134 may vary the extent of blockage of the light path 131 according to the movement of the plunger element 122 as a result of the pressure or force on the pressure reception arrangement 124. According to various embodiments, the cut-out profile 136 of the light blocking element 134 may include, but not limited to, a triangular shape (see FIG. 3A), or a frusto-conical shape (see FIG. 3B), or a trumpet shape (see FIG. 3C), or arc shape (see FIG. 3D) or any other suitable shape which may vary the amount of light passing through as the light blocking element 134 moves to intersect the light path 131. According to various embodiments, the light blocking element 134 may include an elongate plate with the cut-out profile 136 and may be disposed so as to move longitudinally to intersect the light path 131 as the user applies a pressure or force to push the button cap 123.

According to various embodiments, the analog input device 100 may further include a filter 160. The filter 160 may be coupled in an electrical connection between the pressure sensor 121 and the analog-to-digital converter 140. The filter 160 may be configured to reduce noise in the analog signal from the pressure sensor 121. According to various embodiments, the filter 160 may include a low-pass filter.

According to various embodiments, the analog input device 100 may further include a storage element 170. The storage element 170 may be coupled to the processor 142 and may store instructions for execution by the processor 142. According to various embodiments, the storage element 170 may be a memory. According to various embodiments, the memory may include, but not limited to, a read-only memory (ROM), an erasable programmable read-only memory (EPROM), or a flash memory.

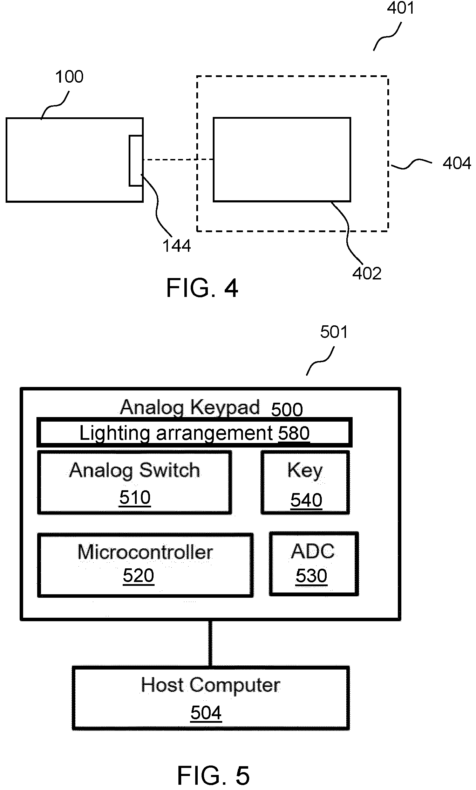

FIG. 4 shows a schematic diagram of a computing system 401 for receiving and processing analog input according to various embodiments. According to various embodiments, the computing system 401 may include a host processor 402 and the analog input device 100connected to the host processor 402 via the communication interface 144. According to various embodiments, the host processor 402 may be a central processing unit of the host computing device 404. According to various embodiments, the host processor 402 may receive the data packet from the input device 100. According to various embodiments, the host processor 402 may interpret the input data packet from the input device 100 and execute programed instructions based on the interpreted input data packet. According to various embodiments, the host processor 402 may determine an amount of depression of the button cap 123 of a respective analog push button assembly 120 based on the digital-step-value corresponding to the analog signal from the analog push button assembly 120. According to various embodiments, the host processor 402 may determine an amount of depression of the button cap 123 of the respective analog push button assembly 120 via performing calculation or mathematical processing or mapping or table look-up operation or other suitable processing technique.

According to various embodiments, the host processor 402 may be configured to generate the lighting signal based on the amount of depression of the button cap 123 determined from the digital-step-value in the data packet received from the analog input device 100 and transmit the lighting signal to the analog input device 100 for controlling the lighting arrangement 180 to light the plurality of light sources 182 based on the digital-step-value. Accordingly, the host processor 402 may process the digital-step-value in the data packet received from the analog input device 100 to generate the lighting signal. The host processor 402 may then send the lighting signal to the analog input device 100 via the communication interface 144.

According to various embodiments, the host processor 402 may generate a corresponding predetermined application event in an application program based on the determined amount of depression of the button cap 123 of the respective analog push button assembly 120 and an input setting for the application program. According to various embodiments, the corresponding predetermined application event may be a programmed action or occurrence triggered by the application program in response or recognition of the determined amount of depression of the button cap 123 of the respective analog push button assembly 120. According to various embodiments, the input setting for the application program may be a mapping of predetermined application events to the matrix of analog push button assemblies 120 and respective amount of depression. According to various embodiments, the input setting may be a pre-defined setting in the application program. According to various embodiments, the input setting may be a user definable or configurable setting which the user may alter or change in the application program accordingly based on user preference and usage.

In the following, a gaming keypad is described as an example of the analog input device 100 according to the various embodiments.

A gaming keypad combines the benefits of keyboards with the compact and ergonomic size of a controller. Typical gaming keypads contain 15-25 keys designed to be controlled by fingers of the users. These keys are laid out in a way similar to that of a keyboard's number pad, to realize various functions such as directions and navigations (up, down, left, and right), changing a weapon, jumping, or shooting. However, the keys in the conventional keypad are coupled to digital switches, which only output a binary signal, limiting the achievable functions of the keypad and possible user intents.

Example embodiments solve these problems by employing analog switches that output analog signals and a corresponding algorithm that process the signals sent from individual keys of the keypad at the host computer that is connected with the keypad wirelessly or through a USB. Analog keypads provide an enhanced input method with more granularity which gives mechanical keyboards the precision control normally found in devices such as gaming controllers, steering wheels, and aviation joysticks. By processing the signals from each key at the host computer, the latency is reduced, and a quicker response is achieved. Further, upgrading the processing solution by handling it in software offers the user flexibility in key mapping. In addition, lighting up the keypad based on the amount of depression of the individual keys may provide visual feedback or indicator to the user. Accordingly, the keypad may display the amount of depression of the individual keys through lighting effects that are proportional to the amount of depression.

FIG. 5 shows a computing system 501 having an analog keypad 500, as an analog input device, in accordance with an example embodiment.

By way of example, the analog keypad 500 may include a plurality of analog switches 510 (or analog pressure sensor) each disposed under a key 540, a microcontroller 520 that includes a processor and a memory, and an analog-to-digital converter (ADC) 530. The analog switches 510 may be based on opto-mechanical switch technology and output different analog signals according to the pressure or force applied to the keys or the displacement of the keys compared with the un-pressed position. The ADC 530 may convert the analog signals into digital signals and send the digital signals to the microcontroller 520 to preprocess the data. The analog keypad 500 may be connected with a host computer 504 wirelessly or through a USB. The host computer may receive the preprocessed data from the microcontroller and perform calculation to determine the pressure or force applied to one or more keys and proceed with actions to be taken.

According to various embodiments, the microcontroller 520 may control a lighting arrangement 580 for lighting up the keys 540 of the analog keypad 500 based on the digital signals from the ADC 530. According to various embodiments, the number of keys 540 being lighted up may be proportional to the digital signals which correspond to an amount of depression of the key 540. According to various embodiments, the microcontroller 520 may directly control the lighting arrangement 580 based on the digital signals from the ADC 530 or may control the lighting arrangement 580 based on a lighting signal generated by the host computer 504 based on the preprocessed data received from the microcontroller 520.

Firmware may be held in the memory (or storage element) such as ROM, EPROM, or flash memory, in order to provide control for the switches and translate the analog signals sent from each analog switch to the host computer, such that the host computer may further process the signals or data to realize the corresponding functions.

In one example embodiment, when the user presses a key (or a button assembly) to a specific distance, the firmware may register this event and the event will be read by the microcontroller. Different events may be registered for difference distances the keys are pressed down. This microcontroller may constantly be monitoring the keys on the keypad via scanning, which may occur many times per second. The firmware may register when the key is pressed and to what distance the key is pressed, and rapidly perform the process of translating the keypresses from physical contact into electrical signals and then outputting them to the host computer and/or control the lighting arrangement of the input device for proportionally lighting up the input device

By way of example, one analog switch (or pressure sensor) may reside underneath each key. The analog switch may include a light emitter, a chopper (or a light blocking element) disposed in the light path and a light receiver (or light sensor). The path that the lights travels along may be substantially in parallel to the surface of the keycap (or button cap). The amount of light that may be detected by the light receiver may be affected by the location of the chopper, which may be further determined by how far the key is pressed down as a function of pressure or force applied to the keycap. As the displacement of the key is proportional to the pressure or force applied, and the amount of light passing through the chopper may be related to the displacement of the key, the amount of the light detected by the light receiver may also be related to the pressure or force applied to the key. As such, the amount of light indicates the pressure or force applied on the key. For example, a spring (or a biasing element) under the key may be configured to allow a displacement of the keycap from the top end position to a bottom end position, which is proportional to the pressure or force applied to the key. The light receiver outputs analog data based on the intensity of the light detected and the analog data is further processed by the microcontroller before being sent to the host computer and/or being used to control the lighting arrangement of the input device for proportionally lighting up the input device.

In one example embodiment, when two directional keys representing x and y directions, respectively, are pressed down simultaneously, the analog switch underneath the first key may output a first analog signal having a first magnitude, and the analog switch underneath the second key may output a second analog signal having a second magnitude. The ADC converts the first and second magnitudes, which are analog signals, into digital signals based on a calibration set with a predetermined range of numbers with a minimum value and a maximum value, and sends the digital signals to the microcontroller. In one example embodiment, one or more filters filter the analog signals based on the predetermined range of numbers and send the filtered analog signals to the ADC, in order to reduce noise in one or more of the analog signals from the force sensitive keys (or pressure sensitive keys). In one example embodiment, the microcontroller may control the lighting arrangement of the input device based on the first magnitude or the second magnitude for proportionally lighting up the input device. For example, microcontroller may control the lighting arrangement of the input device based on a larger or a smaller of the first magnitude or the second magnitude.

The microcontroller may further process the digital signals sent by the ADC and converts the digital signals to codes (or format) that the host computer can understand. For example, when the analog keypad is connected with the host computer through USB, the converted code is a USB code. The conversion is usually done using a lookup table. This table is also where the keyboard layout is defined. The host computer receives the codes of each key from the analog keypad and calculates the addition of the codes, for example, and then determine the directions of the movement. The host computer may further adjust the actuation point of the switches. In addition, the host computer may change the function of the key based on the amount of pressure or force applied on the keycap.

The above-mentioned analog keypad 500 is shown as one example embodiment of an input device. Other input devices such as mice, keyboards or controller with analog switches also apply. One or more features of the input device other than computer games may advantageously be incorporated for many other applications in translating user intent to a form interpretable by any type of computing device, including, but not limited to, personal computers, entertainment systems, industrial computing systems, stenography devices, medical computing systems, and other computing devices.

According to various embodiments, there is provided an input device for providing inputs to a computing device. The input device may include at least one input key or button. The at least one input key or button may include an input surface to receive a depressing force or pressure applied by a user. The at least one input key or button may include a switch interaction component to interact with an analog switch. The at least one input key or button may include the analog switch to receive an interaction with the interaction component, whereby the analog switch detects a property that is a function of the amount of depressing force or pressure applied by the user. The analog switch may output an analog signal. The input device may include a lighting arrangement that may light up a corresponding proportion of the lighting arrangement according to the analog signal.

According to various embodiments, the input device may be a keyboard having a plurality of input keys, or a keypad having a plurality of input keys, or a mouse having two or more click buttons, or a game controller having a plurality of input keys or buttons.

According to various embodiments, the input surface may be a keycap on the top surface of the key and the switch interaction component may be attached to the bottom surface of the key.

According to various embodiments, the analog switch may be located underneath the key and may interface with the switch interaction component that is attached to the bottom surface of the key.

According to various embodiments, the switch may include a light emitter, light receiver, and a chopper, whereby the light emitter may emit light in a light path substantially in parallel to the surface of the keycap which is received by the light receiver, wherein the chopper may be disposed between the light emitter and light receiver.

According to various embodiments, the interaction component may be configured to interface with the chopper to cause the chopper to move within the light path and affect the amount of light that passes through the chopper and that is received by the light receiver, and wherein the property detected by the analog switch is an amount of light received by the light receiver.

According to various embodiments, the amount of movement of the chopper within the light path may be a function of the amount of depressing force or pressure applied by the user.

Various embodiments have provided an analog input device which may provide more granularity of the input in an effective and simple manner. Various embodiments have provided an analog input device which has re-define conventional input device. According to various embodiments, the analog input device may provide visual feedback on the amount of depression via lighting effects of the analog input device.

While the invention has been particularly shown and described with reference to specific embodiments, it should be understood by those skilled in the art that various changes, modification, variation in form and detail may be made therein without departing from the scope of the invention as defined by the appended claims.

## Claims

1. An analog input device (100) comprising:
at least one mounting panel (110);
a matrix of analog push button assemblies (120) mounted to the at least one mounting panel (110), each of the matrix of analog push button assemblies (120) being depressible;
a multiplexer (138) including an input side and an output side, wherein the input side is coupled to the matrix of analog push button assemblies (120);
an analog-to-digital converter (140) which is coupled to the output side of the multiplexer (138) to convert an analog signal, from at least one of the matrix of analog push button assemblies (120) as a measure of an amount of depression of the at least one of the matrix of analog push button assemblies (120) when the at least one of the matrix of analog push button assemblies (120) is pressed by a user's finger, into a corresponding digital-step-value;
**characterized in that** the analog input device (100) further comprises:
a lighting arrangement (180) including a plurality of light sources (182) respectively associated with the matrix of analog push button assemblies (120) in a manner so as to individually illuminate each of the matrix of analog push button assemblies (120);
a processor (142) which is coupled to the analog-to-digital converter (140) and which is configured to control the lighting arrangement (180) to light the plurality of light sources (182) based on the digital-step-value such that a number of the plurality of light sources (182) being lit is proportional to the corresponding digital-step-value which correspond to the amount of depression of the at least one of the matrix of analog push button assemblies (120); and
a communication interface (144) configured to transmit a data packet to a host computing device (404), wherein the processor (142) is configured to output the data packet including a button identity (ID) of the at least one of the matrix of analog push button assemblies pressed by the user's finger and the corresponding digital-step-value, and transmit the data packet via the communication interface (144) to the host computing device (404).

2. The analog input device (100) as claimed in claim 1, wherein the processor (142) is configured to control the lighting arrangement (180) to light the plurality of light sources (182) based on the digital-step-value received from the analog-to-digital converter (140).

3. The analog input device (100) as claimed in claim 1,
wherein the processor (142) is configured to receive, via the communication interface (144), a lighting signal generated by the host computing device (404) based on the digital-step-value in the data packet received from the analog input device (100) for controlling the lighting arrangement (180) to light the plurality of light sources (182) based on the digital-step-value.

4. The analog input device (100) as claimed in any one of claims 1 to 3, wherein each of the matrix of analog push button assemblies (120) comprises an analog pressure sensor (121), wherein the analog pressure sensor (121) comprises:
a pressure reception arrangement (124) having an optical sensing sub-arrangement (125) configured to measure an amount of light varied according to a pressure sensed at the pressure reception arrangement (124) and an output terminal (133), and
a plunger element (122) configured to exert the pressure on the pressure reception arrangement (124),
wherein when the at least one of the matrix of analog push button assemblies (120) is pressed by a user's finger, the amount of depression of the at least one of the matrix of analog push button assemblies (120) causes the plunger element (122) of the at least one of the matrix of analog push button assemblies (120) to correspondingly exert the pressure on the pressure reception arrangement (124) of the at least one of the matrix of analog push button assemblies (120) to vary the amount of light to be detected by the optical sensing sub-arrangment (125) so as to generate the analog signal corresponding to the amount of depression of the at least one of the matrix of analog push button assemblies (120).

5. The analog input device (100) as claimed in claim 4, wherein the pressure reception arrangement (124) comprises a biasing element (126) which is arranged between the plunger element (122) and the at least one mounting panel (110) and which biases the plunger element (122) away from the at least one mounting panel (110) in a biasing direction.

6. The analog input device (100) as claimed in claim 4 or 5, wherein the optical sensing sub-arrangement (125) comprises:
a light emitter (130) which is disposed at an intermediate level between the plunger element (122) and the at least one mounting panel (110) and which is oriented to emit light along a light path perpendicular to a biasing direction of the biasing element (126);
a light sensor (132) which is disposed in the light path and which is configured to generate the analog signal based on the amount of light sensed by the light sensor (132) for outputting via the output terminal (133); and
a light blocking element (134) which is associated with the plunger element (122) in a manner so as to be movable together with the plunger element (122) along a movement direction parallel to the biasing direction and which is extending towards the at least one mounting panel (110) to intersect the light path between the light emitter (130) and the light sensor (132), wherein the light blocking element (134) comprises a cut-out profile (136) which varies the amount of light passing through the light blocking element (134) as the light blocking element (134) moves transversely across the light path when the plunger element (122) is moved towards the at least one mounting panel (110).

7. The analog input device (100) as claimed in any one of claims 1 to 6, further comprising an analog filter (160) coupled in an electrical connection between the matrix of analog push button assemblies (120) and the analog-to-digital converter (140).

8. The analog input device (100) as claimed in any one of claims 1 to 7, wherein the analog signal is an analog voltage.

9. A method of controlling a lighting arrangement (180) of an analog input device (100), the method comprising:
generating an analog signal, from at least one of the matrix of analog push button assemblies (120) of the analog input device (100) when the at least one of the matrix of analog push button assemblies (120) is pressed by a user's finger;
digitizing, via an analog-to-digital converter (140) of the analog input device (100) coupled to an output side of a multiplexer (138) having the matrix of analog push button assemblies (120) coupled to an input side of the multiplexer (138), the analog signal into a corresponding digital-step-value, which corresponds to the amount of depression of the at least one of the matrix of analog push button assemblies (120);
**characterized in that** the method further comprises:
outputting, via a processor (142) of the analog input device (100), a data packet including button identity (ID) and the corresponding digital-step-value of the at least one of the matrix of analog push button assemblies (120) pressed by the user's finger;
transmitting, via a communication interface (144) of the analog input device (100), the data packet from the processor (142) of the analog input device (100) to a host computing device (404); and
controlling a plurality of light sources (182) of a lighting arrangement (180) of the analog input device (100) associated with the matrix of analog push button assemblies (120) of the analog input device (100) based on the corresponding digital-step-value in a manner such that a number of the plurality of light sources (182) of the lighting arrangement (180) being lit is proportional to the corresponding digital-step-value, wherein the plurality of light sources (182) of the lighting arrangement (180) are individually illuminable.

10. The method as claimed in claim 9, further comprising controlling, via the processor (142) of the analog input device (100), the lighting arrangement (180) to light the plurality of light sources (182) based on the corresponding digital-step-value received from the analog-to-digital converter (140) of the analog input device (100).

11. The method as claimed in claim 9, further comprising
generating, via the host computing device (404), a lighting signal based the corresponding digital-step-value from the data packet received from the analog input device (100); and
sending the lighting signal to the analog input device (100) for controlling the lighting arrangement (180) to light the plurality of light sources (182) based on the corresponding digital-step-value.

## Patentansprüche

1. Ein analoges Eingabegerät (100), aufweisend:
mindestens eine Montageplatte (110);
eine Matrix aus analogen Druckknopfbaugruppen (120), die an der mindestens einen Montageplatte (110) montiert sind, wobei jede der Matrix aus analogen Druckknopfbaugruppen (120) niederdrückbar ist;
einen Multiplexer (138), der eine Eingangsseite und eine Ausgangsseite aufweist, wobei die Eingangsseite mit der Matrix analoger Drucktastenbaugruppen (120) gekoppelt ist;
einen Analog-Digital-Wandler (140), der mit der Ausgangsseite des Multiplexers (138) gekoppelt ist, um ein analoges Signal von mindestens einer der Matrix analoger Drucktastenbaugruppen (120) als Maß für einen Betrag des Niederdrückens der mindestens einen der Matrix analoger Drucktastenbaugruppen (120) in einen entsprechenden digitalen Schrittwert umzuwandeln, wenn die mindestens eine der Matrix analoger Drucktastenbaugruppen (120) durch den Finger eines Benutzers gedrückt wird;
**dadurch gekennzeichnet, dass** das analoge Eingabegerät (100) weiterhin aufweist:
eine Beleuchtungsanordnung (180) mit mehreren Lichtquellen (182), die jeweils der Matrix aus analogen Druckknopfbaugruppen (120) zugeordnet sind, um jede der Matrix aus analogen Druckknopfbaugruppen (120) einzeln zu beleuchten;
einen Prozessor (142), der mit dem Analog-Digital-Wandler (140) gekoppelt ist und der so konfiguriert ist, dass er die Beleuchtungsanordnung (180) steuert, um die mehreren Lichtquellen (182) auf der Grundlage des digitalen Schrittwerts zum Leuchten zu bringen, so dass die Anzahl zum Leuchten gebrachter Lichtquellen (182) proportional zum entsprechenden digitalen Schrittwert ist, der dem Betrag des Niederdrückens mindestens einer der Matrix analoger Druckknopfbaugruppen (120) entspricht; und
eine Kommunikationsschnittstelle (144), die so konfiguriert ist, dass sie ein Datenpaket an ein Host-Rechnergerät (404) überträgt, wobei der Prozessor (142) so konfiguriert ist, dass er das Datenpaket einschließlich einer Tastenidentität (ID) der mindestens einen der Matrix analoger Druckknopfbaugruppen, die mit dem Finger des Benutzers gedrückt werden, und den entsprechende digitalen Schrittwert ausgibt,
und um das Datenpaket über die Kommunikationsschnittstelle (144) an das Host-Rechnergerät (404) zu übertragen.

2. Das analoge Eingabegerät (100) gemäß Anspruch 1, wobei der Prozessor (142) so konfiguriert ist, dass er die Beleuchtungsanordnung (180) steuert, um die mehreren Lichtquellen (182) auf der Grundlage des von dem Analog-Digital-Wandler (140) empfangenen digitalen Schrittwerts zum Leuchten zu bringen.

3. Das analoge Eingabegerät (100) gemäß Anspruch 1,
wobei der Prozessor (142) so konfiguriert ist, dass er über die Kommunikationsschnittstelle (144) ein Beleuchtungssignal empfängt, das vom Host-Rechnergerät (404) basierend auf dem digitalen Schrittwert in dem vom analogen Eingabegerät empfangenen Datenpaket generiert wird (100), zum Steuern der Beleuchtungsanordnung (180), um die mehreren Lichtquellen (182) basierend auf dem digitalen Schrittwert zum Leuchten zu bringen.

4. Das analoge Eingabegerät (100) gemäß einem der Ansprüche 1 bis 3, wobei jede der Matrix analoger Drucktastenbaugruppen (120) einen analogen Drucksensor (121) aufweist, wobei der analoge Drucksensor (121) aufweist:
eine Druckempfangsanordnung (124) mit einer optischen Erfassungsunteranordnung (125), die so konfiguriert ist, dass sie eine Lichtmenge misst, die entsprechend einem an der Druckempfangsanordnung (124) erfassten Druck und einem Ausgangsanschluss (133) variiert, und
ein Stößelement (122), das dazu konfiguriert ist, den Druck auf die Druckaufnahmeanordnung (124) auszuüben,
wobei, wenn die mindestens eine der Matrix analoger Drucktastenbaugruppen (120) durch den Finger eines Benutzers gedrückt wird, der Betrag des Niederdrückens der mindestens einen der Matrix analoger Drucktastenbaugruppen (120) dazu führt, dass das Stößelement (122) der mindestens einen der Matrix analoger Druckknopfanordnungen (120) entsprechend den Druck auf die Druckaufnahmeanordnung (124) der mindestens einen der Matrix analoger Druckknopfanordnungen (120) ausübt, um den Betrag der Lichtmenge zu variieren, die von der optischen Erfassungsunteranordnung (125) erfasst wird, um das analoge Signal zu erzeugen, das dem Betrag des Niederdrückens von mindestens einer der Matrix analoger Druckknopfbaugruppen (120) entspricht.

5. Das analoge Eingabegerät (100) gemäß Anspruch 4, wobei die Druckaufnahmeanordnung (124) ein Vorspannelement (126) aufweist, das zwischen dem Stößelement (122) und der mindestens einen Montageplatte (110) angeordnet ist und das das Stößelement (122) in einer Vorspannrichtung von der mindestens einen Montageplatte (110) weg vorspannt.

6. Das analoge Eingabegerät (100) gemäß Anspruch 4 oder 5, wobei die optische Abtastunteranordnung (125) aufweist:
einen Lichtemitter (130), der auf einer Zwischenebene zwischen dem Stößelement (122) und der mindestens einen Montageplatte (110) angeordnet ist und so ausgerichtet ist, dass er Licht entlang eines Lichtpfads senkrecht zu einer Vorspannrichtung des Vorspannelements emittiert (126);
einen Lichtsensor (132), der im Lichtweg angeordnet ist und dazu konfiguriert ist, das analoge Signal basierend auf der vom Lichtsensor (132) erfassten Lichtmenge zur Ausgabe über den Ausgangsanschluss (133) zu erzeugen; und
ein Lichtblockierelement (134), das dem Stößelement (122) derart zugeordnet ist, dass es zusammen mit dem Stößelement (122) entlang einer Bewegungsrichtung parallel zur Vorspannrichtung bewegbar ist und sich in Richtung der mindestens einen Montageplatte (110) erstreckt, um den Lichtweg zwischen dem Lichtsender (130) und dem Lichtsensor (132) zu schneiden, wobei das Lichtblockierelement (134) ein ausgeschnittenes Profil (136) aufweist, das die Menge des durch das Lichtblockierelement (134) durchtretenden Lichts variiert, während sich das Lichtblockierelement (134) quer über den Lichtweg bewegt, wenn das Stößelement (122) in Richtung der mindestens einen Montageplatte (110) bewegt wird.

7. Das analoge Eingabegerät (100) gemäß einem der Ansprüche 1 bis 6, weiter aufweisend einen Analogfilter (160), der in einer elektrischen Verbindung zwischen der Matrix analoger Druckknopfbaugruppen (120) und dem Analog-Digital-Wandler (140) gekoppelt ist.

8. Das analoge Eingabegerät (100) gemäß einem der Ansprüche 1 bis 7, wobei das analoge Signal eine analoge Spannung ist.

9. Ein Verfahren zum Steuern einer Beleuchtungsanordnung (180) eines analogen Eingabegeräts (100), wobei das Verfahren aufweist:
Erzeugen eines analogen Signals von mindestens einer der Matrix analoger Drucktastenbaugruppen (120) des analogen Eingabegeräts (100), wenn die mindestens eine der Matrix analoger Drucktastenbaugruppen (120) durch den Finger eines Benutzers gedrückt wird;
Digitalisieren, über einen Analog-Digital-Wandler (140) des analogen Eingabegeräts (100), der mit einer Ausgangsseite eines Multiplexers (138) gekoppelt ist, wobei die Matrix aus analogen Drucktastenbaugruppen (120) mit einer Eingangsseite des Multiplexer (138) gekoppelt ist, des analogen Signals in einen entsprechenden digitalen Schrittwert, der dem Betrag des Niederdrückens von mindestens einer der Matrix analoger Druckknopfbaugruppen (120) entspricht;
**dadurch gekennzeichnet, dass** das Verfahren weiterhin aufweist:
Ausgeben, über einen Prozessor (142) des analogen Eingabegeräts (100), eines Datenpakets, das die Tastenidentität (ID) und den entsprechenden digitalen Schrittwert von mindestens einer der Matrix analoger Tastenbaugruppen (120) enthält, der durch den Finger des Benutzers gedrückt ist;
Übertragen des Datenpakets vom Prozessor (142) des analogen Eingabegeräts (100) über eine Kommunikationsschnittstelle (144) des analogen Eingabegeräts (100) an ein Host-Rechnergerät (404); und
Steuern einer Vielzahl von Lichtquellen (182) einer Beleuchtungsanordnung (180) des analogen Eingabegeräts (100), die der Matrix von analogen Drucktastenbaugruppen (120) des analogen Eingabegeräts (100) zugeordnet sind, basierend auf den entsprechenden digitalen Schrittwert in einer Weise, dass eine Anzahl der mehreren beleuchteten Lichtquellen (182) der Beleuchtungsanordnung (180) proportional zum entsprechenden digitalen Schrittwert ist,
wobei die mehreren Lichtquellen (182) der Beleuchtungsanordnung (180) einzeln beleuchtbar sind.

10. Das Verfahren gemäß Anspruch 9, das weiterhin das Steuern der Beleuchtungsanordnung (180) über den Prozessor (142) des analogen Eingabegeräts (100) aufweist, um die mehreren Lichtquellen (182) auf der Grundlage des entsprechenden digitalen Schrittwert, der vom Analog-Digital-Wandler (140) des analogen Eingabegeräts (100) empfangen wird, zum Leuchten zu bringen.

11. Das Verfahren gemäß Anspruch 9, weiterhin aufweisend:
Erzeugen, über das Host-Rechnergerät (404), eines Beleuchtungssignals basierend auf dem entsprechenden digitalen Schrittwert aus dem vom analogen Eingabegerät (100) empfangenen Datenpaket; und
Senden des Beleuchtungssignals an das analoge Eingabegerät (100) zum Steuern der Beleuchtungsanordnung (180), um die mehreren Lichtquellen (182) auf der Grundlage des entsprechenden digitalen Schrittwerts zum Leuchten zu bringen.

## Revendications

1. Dispositif d'entrée analogique (100), comprenant :
au moins un panneau de montage (110) ;
une matrice d'ensembles de boutons-poussoirs analogiques (120) montés sur ledit au moins un panneau de montage (110), chacun de la matrice d'ensembles de boutons-poussoirs analogiques (120) étant enfonçable ;
un multiplexeur (138) comprenant un côté entrée et un côté sortie, le côté entrée étant couplé à la matrice d'ensembles de boutons-poussoirs analogiques (120) ;
un convertisseur analogique-numérique (140) couplé au côté sortie du multiplexeur (138) pour convertir un signal analogique, provenant d'au moins un de la matrice d'ensembles de boutons-poussoirs analogiques (120) en tant que mesure d'un degré d'enfoncement dudit au moins un de la matrice d'ensembles de boutons-poussoirs analogiques (120) lorsque ledit au moins un de la matrice d'ensembles de boutons-poussoirs analogiques (120) est appuyé par un doigt d'un utilisateur en une valeur de pas numérique correspondante ;
**caractérisé en ce que** le dispositif d'entrée analogique (100) comprend en outre :
un agencement d'éclairage (180) comprenant une pluralité de sources lumineuses (182) respectivement associées à la matrice d'ensembles de boutons-poussoirs analogiques (120) de manière à éclairer individuellement chacun de la matrice d'ensembles de boutons-poussoirs analogiques (120) ;
un processeur (142) couplé au convertisseur analogique-numérique (140) et configuré pour commander l'agencement d'éclairage (180) afin d'éclairer la pluralité de sources lumineuses (182) sur la base de la valeur de pas numérique, de sorte qu'un nombre de la pluralité de sources lumineuses (182) éclairées est proportionnel à la valeur de pas numérique correspondante qui correspond au degré d'enfoncement dudit au moins un de la matrice d'ensembles de boutons-poussoirs analogiques (120) ; et
une interface de communication (144) configurée pour transmettre un paquet de données à un dispositif informatique hôte (404), dans lequel le processeur (142) est configuré pour émettre le paquet de données comprenant une identité de bouton (ID) dudit au moins un de la matrice d'ensembles de boutons-poussoirs analogiques appuyés par le doigt de l'utilisateur et la valeur de pas numérique correspondante, et transmettre le paquet de données par l'intermédiaire de l'interface de communication (144) au dispositif informatique hôte (404).

2. Dispositif d'entrée analogique (100) selon la revendication 1, dans lequel le processeur (142) est configuré pour commander l'agencement d'éclairage (180) pour éclairer la pluralité de sources lumineuses (182) sur la base de la valeur de pas numérique reçue du convertisseur analogique-numérique (140).

3. Dispositif d'entrée analogique (100) selon la revendication 1,
dans lequel le processeur (142) est configuré pour recevoir, par l'intermédiaire de l'interface de communication (144), un signal d'éclairage généré par le dispositif informatique hôte (404) sur la base de la valeur de pas numérique dans le paquet de données reçu du dispositif d'entrée analogique (100) pour commander l'agencement d'éclairage (180) pour éclairer la pluralité de sources lumineuses (182) sur la base de la valeur de pas numérique.

4. Dispositif d'entrée analogique (100) selon l'une quelconque des revendications 1 à 3, dans lequel chacun de la matrice d'ensembles de boutons-poussoirs analogiques (120) comprend un capteur de pression analogique (121), dans lequel le capteur de pression analogique (121) comprend :
un agencement de réception de pression (124) comportant un sous-agencement de détection optique (125) configuré pour mesurer une quantité de lumière variant en fonction d'une pression détectée au niveau de l'agencement de réception de pression (124) et une borne de sortie (133), et
un élément plongeur (122) configuré pour exercer la pression sur l'agencement de réception de pression (124),
dans lequel, lorsque ledit au moins un de la matrice d'ensembles de boutons-poussoirs analogiques (120) est appuyé par un doigt d'un utilisateur, le degré d'enfoncement dudit au moins un de la matrice d'ensembles de boutons-poussoirs analogiques (120) fait que l'élément plongeur (122) dudit au moins un de la matrice d'ensembles de boutons-poussoirs analogiques (120) exerce de manière correspondante la pression sur l'agencement de réception de pression (124) dudit au moins un de la matrice d'ensembles de boutons-poussoirs analogiques (120) afin de faire varier la quantité de lumière à détecter par le sous-agencement de détection optique (125) afin de générer le signal analogique correspondant au degré d'enfoncement dudit au moins un de la matrice d'ensembles de boutons-poussoirs analogiques (120).

5. Dispositif d'entrée analogique (100) selon la revendication 4, dans lequel l'agencement de réception de pression (124) comprend un élément de sollicitation (126) qui est disposé entre l'élément plongeur (122) et ledit au moins un panneau de montage (110) et qui sollicite l'élément plongeur (122) loin dudit au moins un panneau de montage (110) dans une direction de sollicitation.

6. Dispositif d'entrée analogique (100) selon la revendication 4 ou 5, dans lequel le sous-agencement de détection optique (125) comprend :
un émetteur de lumière (130) disposé à un niveau intermédiaire entre l'élément plongeur (122) et ledit au moins un panneau de montage (110) et orienté de manière à émettre de la lumière le long d'un trajet lumineux perpendiculaire à une direction de sollicitation de l'élément de sollicitation (126) ;
un capteur de lumière (132) disposé sur le trajet de lumière et configuré pour générer un signal analogique basé sur la quantité de lumière détectée par le capteur de lumière (132) pour une émission par l'intermédiaire de la borne de sortie (133) ; et
un élément de blocage de lumière (134) associé à l'élément plongeur (122) de manière à être mobile avec l'élément plongeur (122) le long d'une direction de mouvement parallèle à la direction de sollicitation et qui s'étend vers ledit au moins un panneau de montage (110) pour couper le trajet de lumière entre l'émetteur de lumière (130) et le capteur de lumière (132), dans lequel l'élément de blocage de lumière (134) comprend un profil de découpe (136) qui fait varier la quantité de lumière passant à travers l'élément de blocage de lumière (134) lorsque l'élément de blocage de lumière (134) se déplace transversalement sur le trajet de lumière lorsque l'élément plongeur (122) est déplacé vers ledit au moins un panneau de montage (110).

7. Dispositif d'entrée analogique (100) selon l'une quelconque des revendications 1 à 6, comprenant en outre un filtre analogique (160) couplé en une connexion électrique entre la matrice d'ensembles de boutons-poussoirs analogiques (120) et le convertisseur analogique-numérique (140).

8. Dispositif d'entrée analogique (100) selon l'une quelconque des revendications 1 à 7, dans lequel le signal analogique est une tension analogique.

9. Procédé de commande d'un agencement d'éclairage (180) d'un dispositif d'entrée analogique (100), le procédé comprenant :
la génération d'un signal analogique à partir d'au moins un de la matrice d'ensembles de boutons-poussoirs analogiques (120) du dispositif d'entrée analogique (100) lorsque ledit au moins un de la matrice d'ensembles de boutons-poussoirs analogiques (120) est appuyé par un doigt d'un utilisateur ;
la numérisation, par l'intermédiaire d'un convertisseur analogique-numérique (140) du dispositif d'entrée analogique (100) couplé à un côté sortie d'un multiplexeur (138) ayant la matrice d'ensembles de boutons-poussoirs analogiques (120) couplés à un côté entrée du multiplexeur (138), du signal analogique en une valeur de pas numérique correspondante, qui correspond au degré d'enfoncement dudit au moins un de la matrice d'ensembles de boutons-poussoirs analogiques (120) ;
**caractérisé en ce que** le procédé comprend en outre :
l'émission, par l'intermédiaire d'un processeur (142) du dispositif d'entrée analogique (100), d'un paquet de données comprenant une identité de bouton (ID) et la valeur de pas numérique correspondante dudit au moins un de la matrice d'ensembles de boutons-poussoirs analogiques (120) appuyés par le doigt de l'utilisateur ;
la transmission, par l'intermédiaire d'une interface de communication (144) du dispositif d'entrée analogique (100), du paquet de données du processeur (142) du dispositif d'entrée analogique (100) à un dispositif informatique hôte (404) ; et
la commande d'une pluralité de sources lumineuses (182) d'un agencement d'éclairage (180) du dispositif d'entrée analogique (100) associé à la matrice d'ensembles de boutons-poussoirs analogiques (120) du dispositif d'entrée analogique (100) sur la base de la valeur de pas numérique correspondante de manière à ce qu'un nombre de la pluralité de sources lumineuses (182) de l'agencement d'éclairage (180) éclairées soit proportionnel à la valeur de pas numérique correspondante,
dans lequel la pluralité de sources lumineuses (182) de l'agencement d'éclairage (180) peuvent être éclairées individuellement.

10. Procédé selon la revendication 9, comprenant en outre la commande, par l'intermédiaire du processeur (142) du dispositif d'entrée analogique (100), de l'agencement d'éclairage (180) pour éclairer la pluralité de sources lumineuses (182) sur la base de la valeur de pas numérique correspondante reçue du convertisseur analogique-numérique (140) du dispositif d'entrée analogique (100).

11. Procédé selon la revendication 9, comprenant en outre :
la génération, par l'intermédiaire du dispositif informatique hôte (404), d'un signal d'éclairage basé sur la valeur de pas numérique correspondante du paquet de données reçu du dispositif d'entrée analogique (100) ; et
la transmission du signal d'éclairage au dispositif d'entrée analogique (100) pour commander l'agencement d'éclairage (180) afin d'éclairer la pluralité de sources lumineuses (182) sur la base de la valeur de pas numérique correspondante.
